# EUROPEAN PATENT APPLICATION

(11) **EP 2 018 025 A2**
(43) Date of publication of application: **21.01.2009**
(21) Application number: 08275033.2
(22) Date of filing: 16.07.2008
(51) Int. Cl.: H04L 29/06

(54) **Communication system and method**

(30) Priority: 16.07.2007 GB 0713787
(71) Applicant: Cellcrypt Limited, Woking Surrey GU21 6BY (GB)
(72) Inventor: Poppe, Tobias, Cellcrypt Limited, Woking Surrey GU21 6BY (GB)
(74) Representative: Exell, Jonathan Mark

(57) **Abstract**

A method and system for communicating packetized audio or audio-visual communications over a data communications network is disclosed. Packets meeting a predetermined criterion are identified and bypass integrity protection. Integrity protection is applied to all other packets

## Description

### Field of the Invention

The present invention relates to a method and system implementing a security protocol that is particularly applicable to secure voice communication over packetized data networks.

### Background to the Invention

There exist many security protocols for data communications. Each of these derives from the basic framework proposed by, amongst others, Bruce Schneier in his book "Applied Cryptography" and "Practical Cryptography".

A security protocol includes the following features:
- Authentication - identification of the other party/parties to the communication session;
- Confidentiality - taking steps such that data from the communication session is only available to the authenticated parties.
- Integrity - ensuring that data received by a party as part of the communication session has not been changed and that all data has been received.

Security protocols create a significant overhead on the load of a data communications network. Indeed the size of secured packets can easily be double that of unsecured packets.

Whilst most data communication sessions have at least a degree of resilience in respect of latency and can therefore accommodate the overhead that an increase in packet size inevitably produces, there are increasingly types of communication systems that cannot tolerate such latency.

This is particularly the case with voice based data communication systems such as VOIP (voice over IP) which require packet delivery in substantially real time.

Even on the most advanced networks offering unlimited bandwidth, a defined quality of service and preferential routing for real time protocols, actually achieving real-time delivery of protected packets protected by a security protocol is a challenge for network operators. Where quality of service and preferential routing is not available or where there may be limited bandwidth, use of security protocols for real-time packets whilst maintaining real-time delivery is almost impossible.

To achieve almost real-time service, voice frames should be sent at a rate of around 50 per second. Traditionally each voice frame is integrity protected. The size of each voice frame in common applications is 12 bytes. Integrity protection can take up to 32 extra bytes per frame almost tripling the bandwidth requirements. A common technique to reduce this overhead is to combine frames and protect them using a single integrity checksum. (e.g. putting 6 voice frames (6 * 12 = 72 byte) into 1 packet and protecting this with a 32 byte integrity checksum). However, this still adds a 40% overhead to the communication traffic.

### Statement of Invention

According to an aspect of the present invention there is provided a packetized audio or audio-visual communications system including an integrity protection system for protecting integrity of packets during transmission over a data communications network, wherein the communications system is arranged to identify packets meeting a predetermined criterion and is arranged to bypass operation of the integrity protection system for said packets.

The packetized audio or audio-visual communications system is preferably arranged to bypass the integrity protection system for received packets meeting the predetermined criterion.

The packetized audio or audio-visual communications system is preferably arranged to bypass the integrity protection system for packets to be transmitted that meet the predetermined criterion.

The predetermined criterion may comprise one or more criteria selected from a group including:
protocol type of the packet matching a predetermined protocol type; a flag or other tag embedded or associated with the packet; routing mechanism under which the packet is to be transmitted or has been received; network from which the packet is to be transmitted or has been received; and,. parameters on the network from which the packet is to be transmitted or has been received.

The system may further comprise a client system at each of a first and second node, the first and second nodes being connected to the data communications network, wherein each of the client systems includes the integrity protection system and a packet reception buffer, each of the client systems being arranged to monitor their respective packet reception buffer for packets received from the data communications network meeting the predetermined criterion and to bypass the respective integrity protection for said packets.

The system further comprise a client system at each of a first and second node, the first and second nodes being connected to the data communications network, wherein each of the client systems includes the integrity protection system and a packet transmission buffer, each of the client systems being arranged to monitor its respective packet transmission buffer for packets to be transmitted that meet the predetermined criterion and to bypass the respective integrity protection for said packets.

The integrity protection system may include a hashing system arranged to append a hash of a packet to a packet to be transmitted, upon bypassing the integrity protection system the packet is transmitted without the hash being appended.

The integrity protection system may include a hashing system arranged to generate a hash of a packet received to compare the generated hash to a hash appended to the packet prior to transmission and to reject a packet where the generated hash does not match the appended hash, upon bypassing the integrity protection system the packet is accepted irrespective of any hash appended to the packet.

According to another aspect of the present invention, there is provided a method of communicating packetized audio or audio-visual communications over a data communications network comprising:
identifying packets meeting a predetermined criterion and bypassing integrity protection for said packets; and
applying integrity protection for all other packets.

The identifying step may include bypassing the integrity protection for received packets meeting the predetermined criterion. The identifying step may include bypassing the integrity protection for packets to be transmitted that meet the predetermined criterion.

The predetermined criterion may comprise one or more criteria selected from a group including:
protocol type of the packet matching a predetermined protocol type; a flag or other tag embedded or associated with the packet; routing mechanism under which the packet is to be transmitted or has been received; network from which the packet is to be transmitted or has been received; and,. parameters on the network from which the packet is to be transmitted or has been received.

The method may further comprise:
operating a client system at each of a first and second node, the first and second nodes being connected to the data communications network,
monitoring a packet reception buffer at each client system for packets received from the data communications network meeting the predetermined criterion;
bypassing the integrity protection for said packets; and,
applying, at the respective client system, integrity protection to all other packets in the reception buffer.

The method may further comprise:
operating a client system at each of a first and second node, the first and second nodes being connected to the data communications network,
monitoring a packet transmission buffer at each client system for packets to be transmitted that meet the predetermined criterion;
bypassing the integrity protection for said packets; and,
applying, at the respective client system, integrity protection to all other packets in the packet transmission buffer prior to transmission.

The step of applying integrity protection may include:
generating hash system of a packet received;
comparing the generated hash to a hash appended to the packet prior to transmission; and,
rejecting the packet if the generated hash does not match the appended hash.

According to another aspect of the present invention, there is provided a computer-readable medium encoded with a computer program for communicating packetized audio or audio-visual communications over a data communications network, the computer program comprising:
computer program code for identifying packets meeting a predetermined criterion and bypassing integrity protection for said packets; and
computer program code for applying integrity protection for all other packets.

The computer program code for identifying packets may include:
computer program code for bypassing the integrity protection for received packets meeting the predetermined criterion. The computer program code for identifying packets may include:
   computer program code for bypassing the integrity protection for packets to be transmitted that meet the predetermined criterion.

The computer-readable medium may further comprise:
computer program code for operating a client system at each of a first and second node, the first and second nodes being connected to the data communications network,
computer program code for monitoring a packet reception buffer at each client system for packets received from the data communications network meeting the predetermined criterion;
computer program code for causing the client system to bypass the integrity protection for said packets; and,
computer program code for causing the respective client system to apply integrity protection to all other packets in the reception buffer.

The computer-readable medium may further comprise:
computer program code for operating a client system at each of a first and second node, the first and second nodes being connected to the data communications network,
computer program code for monitoring a packet transmission buffer at each client system for packets to be transmitted that meet the predetermined criterion;
computer program code for causing the client system to bypass the integrity protection for said packets; and,
computer program code for causing the respective client system to apply integrity protection to all other packets in the transmission buffer prior to transmission.

A traditional security protocol would discard the message if the integrity checksum is wrong and optionally ask the sender to retransmit the packet. However, in a real-time protocol, such as VOIP, there is no time to request retransmission of a wrongly received packet. Any packet wrongly or not received is not played through the speaker.

In embodiments of the present invention, instead of not playing any data associated with an incorrect integrity checksum, the integrity checksum is ignored completely. This means packets are processed faster and if they have been tampered with the user will hear (and see in the case of visual communications) white noise instead of nothing.

### Brief Description of the Drawings

An embodiment of the present invention will now be described in detail, by way of example only, with reference to the accompanying drawings, in which:

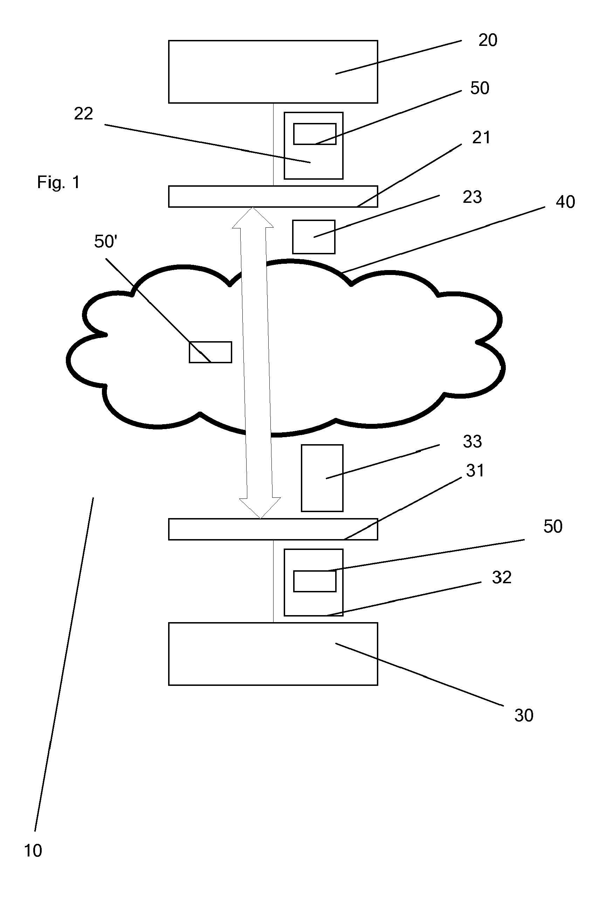

Figure 1 is a schematic diagram of a packetised communication system for use with an embodiment of the present invention.

### Detailed Description

Figure 1 is a schematic diagram of a packetised audio or audio-visual communication system for use with an embodiment of the present invention.

The packetised audio or audio-visual communication system 10 includes a first node 20 and a second node 30. Each of the first node 20 and second node 30 includes a security sub-system 21, 31 that is interposed between the respective nodes 20, 30 and a communication network 40. Transmitted and received data packets pass through the security sub-system 21, 31 to be secured and checked as necessary in accordance with a pre-defined security protocol.

In use, a voice data packet 50 transmitted from the first node 20 passes through the node's respective security sub-system 21. The packet is encrypted using a previously agreed encryption key (normally referred to as the session key). Other forms of symmetric or asymmetric ciphers may also be used.

Standard security protocols would then add a hash of the encrypted message to the end of the message which would typically increase the size of the packet from 20 bytes to as much as 50 or 60 bytes. However, in an embodiment of the present invention, the packet is identified as being a packet meeting a predetermined criterion (in this case requiring substantially real time delivery) and the security sub-system 21 disables its integrity functionality. The secured packet 50' is then transmitted over the data communication network 40 to the second node 30. At the second node 30, it is identified that the packet is one of a predetermined class of packets requiring substantially real-time delivery and any standard integrity testing that is normally done by the security sub-system 31 is bypassed. The packet 50' is decrypted to obtain the data packet 50 and is then passed on to the second node 30. Similar operation happens in reverse when data packets are transmitted from the second node 30 to the first node 20.

The packet class may be identified based on protocol type, a flag embedded within the packet or some other predetermined criteria such as routing mechanism, network from which the packet is received, parameters (such as current bandwidth availability, latency etc) of the network or the like. Preferably, the security protocol operated by the respective security subsystems 21 and 31 provides integrity functionality for all packet classes other than those within the predetermined classes identified as needing substantially real time delivery.

Preferably, each of the first and second nodes include transmission and reception queues 22, 23 and 32, 33 respectively, in which received packets and packets for transmission are queued before processing by the security subsystem 21, 31. These queues are monitored by the security subsystem of the respective node and packets matching the predetermined criterion/packet class are pulled from the queue and bypass the integrity protection applied by the security subsystem.

## Claims

1. A packetized audio or audio-visual communications system including an integrity protection system for protecting integrity of packets during transmission over a data communications network, wherein the communications system is arranged to identify packets meeting a predetermined criterion and is arranged to bypass operation of the integrity protection system for said packets.

2. A packetized audio or audio-visual communications system according to claim 1, wherein the packetized audio or audio-visual communications system is arranged to bypass the integrity protection system for received packets meeting the predetermined criterion.

3. A packetized audio or audio-visual communications system according to claim 1 or 2, wherein the packetized audio or audio-visual communications system is arranged to bypass the integrity protection system for packets to be transmitted that meet the predetermined criterion.

4. A packetized audio or audio-visual communications system according to claim 1, 2 or 3, wherein the predetermined criterion comprises one or more criteria selected from a group including:
protocol type of the packet matching a predetermined protocol type; a flag or other tag embedded or associated with the packet; routing mechanism under which the packet is to be transmitted or has been received; network from which the packet is to be transmitted or has been received; and,. parameters on the network from which the packet is to be transmitted or has been received.

5. A packetized audio or audio-visual communications system according to any preceding claim, further comprising a client system at each of a first and second node, the first and second nodes being connected to the data communications network, wherein each of the client systems includes the integrity protection system and a packet reception buffer, each of the client systems being arranged to monitor their respective packet reception buffer for packets received from the data communications network meeting the predetermined criterion and to bypass the respective integrity protection for said packets.

6. A packetized audio or audio-visual communications system according to any preceding claim, further comprising a client system at each of a first and second node, the first and second nodes being connected to the data communications network, wherein each of the client systems includes the integrity protection system and a packet transmission buffer, each of the client systems being arranged to monitor its respective packet transmission buffer for packets to be transmitted that meet the predetermined criterion and to bypass the respective integrity protection for said packets.

7. A packetized audio or audio-visual communications system according to any preceding claim, wherein the integrity protection system includes a hashing system arranged to append a hash of a packet to a packet to be transmitted, upon bypassing the integrity protection system the packet is transmitted without the hash being appended.

8. A packetized audio or audio-visual communications system according to any preceding claim, wherein the integrity protection system includes a hashing system arranged to generate a hash of a packet received to compare the generated hash to a hash appended to the packet prior to transmission and to reject a packet where the generated hash does not match the appended hash, upon bypassing the integrity protection system the packet is accepted irrespective of any hash appended to the packet.

9. A method of communicating packetized audio or audio-visual communications over a data communications network comprising:
identifying packets meeting a predetermined criterion and bypassing integrity protection for said packets; and
applying integrity protection for all other packets.

10. A method according to claim 9, wherein the identifying step includes bypassing the integrity protection for received packets meeting the predetermined criterion.

11. A method according to claim 9 or 10, wherein the identifying step includes bypassing the integrity protection for packets to be transmitted that meet the predetermined criterion.

12. A method according to claim 9, 10 or 11, wherein the predetermined criterion comprises one or more criteria selected from a group including:
protocol type of the packet matching a predetermined protocol type; a flag or other tag embedded or associated with the packet; routing mechanism under which the packet is to be transmitted or has been received; network from which the packet is to be transmitted or has been received; and,. parameters on the network from which the packet is to be transmitted or has been received.

13. A method according to any of claims 9 to 12, further comprising:
operating a client system at each of a first and second node, the first and second nodes being connected to the data communications network,
monitoring a packet reception buffer at each client system for packets received from the data communications network meeting the predetermined criterion;
bypassing the integrity protection for said packets; and,
applying, at the respective client system, integrity protection to all other packets in the reception buffer.

14. A method according to any of claims 9 to 13, further comprising:
operating a client system at each of a first and second node, the first and second nodes being connected to the data communications network,
monitoring a packet transmission buffer at each client system for packets to be transmitted that meet the predetermined criterion;
bypassing the integrity protection for said packets; and,
applying, at the respective client system, integrity protection to all other packets in the packet transmission buffer prior to transmission.

15. A method according to claim 13 or 14, wherein the step of applying integrity protection includes:
generating hash system of a packet received;
comparing the generated hash to a hash appended to the packet prior to transmission; and,
rejecting the packet if the generated hash does not match the appended hash.

16. A computer program comprising computer program code means for performing all of the steps of any of claims 9 to 15 when said program is run on a computer.
